# EUROPEAN PATENT APPLICATION

(11) **EP 2 804 441 A1**
(43) Date of publication of application: **19.11.2014**
(21) Application number: 13305616.8
(22) Date of filing: 15.05.2013
(51) Int. Cl.: H04W 76/02

(54) **Network nodes and methods**

(71) Applicant: ALCATEL LUCENT, 92100 Boulogne-Billancourt (FR)
(72) Inventor: Casati, Alessio, Swindon, Wiltshire SN5 7DJ (GB)
(74) Representative: Leppard, Andrew John

(57) **Abstract**

Network nodes, methods and a computer program product are disclosed. A wireless telecommunications network node method, comprises: receiving a request from a radio access node to provide a context to enable the radio access node to support communications with a user equipment; determining whether a context identifier has been allocated for use by the user equipment and, if not, allocating a context identifier for use with requests to provide a context for the user equipment; and providing a context together with the context identifier to the radio access node. In this way, each context within the wireless telecommunications network can be associated with a particular user equipment, which enables these contexts to be easily identified by the network thereafter with minimal effort.

## Description

### FIELD OF THE INVENTION

The present invention relates to network nodes, methods and a computer program product.

### BACKGROUND

Wireless telecommunications networks are known. In those known networks, radio coverage is provided to user equipment, for example, mobile telephones, by geographical area or cell. A radio access node, for example, a base station, is located in each cell to provide the required radio coverage. User equipment in the area served by a base station receives information from the base station and transmits information and data to the base station.

Information and data transmitted by base stations to user equipment occurs on channels of radio carriers known as downlink carriers. Information and data transmitted by user equipment to base stations occurs on channels of radio carriers known as uplink carriers.

In known wireless telecommunications networks, user equipment can move between cells. A Mobility Management Entity (MME) acts as a key control node. The MME is responsible for authenticating user equipment and also operates to select a serving gateway for user equipment and a packet gateway. Those gateways maybe of use when user equipment initially attaches to the communications network and when user equipment has data traffic to send to the network. The mobility management entity is also operable to reselect serving gateways at times of handover between base stations.

There are various radio states in which user equipment may operate in a telecommunications network. Once it has synchronised and fully attached to a base station it gains a Radio Resource Control (RRC) connection and is referred to as being in connected mode. User equipment in idle mode does not have an RRC connection.

When connecting to a base station, the base station is provided with so-called "context", which is information provided typically by the core network (eg the MME) to the base station and which is used to control or manage communications between the user equipment and base station.

Although such an approach facilities the operation of the wireless telecommunications network, unexpected consequences can occur. Accordingly, it is desired to improve the operation of the wireless telecommunications network.

### SUMMARY

According to a first aspect, there is provided a wireless telecommunications network node method, comprising: receiving a request from a radio access node to provide a context to enable the radio access node to support communications with a user equipment; determining whether a context identifier has been allocated for use by the user equipment and, if not, allocating a context identifier for use with requests to provide a context for the user equipment; and providing a context together with the context identifier to the radio access node. The first aspect recognizes that providing context information requires messaging with the core network in order to provide this context each time a user equipment attaches to a radio access node, such as a base station. This is because when the user equipment detaches from the radio access node, this context is deleted in both the user equipment and the base station. The first aspect also recognizes that although it is possible to provide an approach where the context is retained by the radio access node and the user equipment for a period of time, to enable the user equipment to support communications with the base station should it subsequently be connected to the base station within that time period, although this reduces the load on the core network, this introduces additional complexity when it is desired to delete or change this context, should it be necessary to bar all re-authenticate the user.

Accordingly, a method is provided. The method may comprise the step of receiving a request from radio access node to provide a context to enable communications to be supported between the radio access node and a user equipment. The method may comprise the step of determining whether a context identifier has already been allocated for use by the user equipment. If an identifier has already been allocated, this context identifier may then be allocated for use in response to requests to provide a context for that user equipment. The context identifier may then be provided to the radio access node together with a context provided in response to the request. In this way, each context within the wireless telecommunications network can be associated with a particular user equipment, which enables these contexts to be easily identified by the network thereafter with minimal effort.

In one embodiment the step of receiving comprises receiving a request from another radio access node to provide a context to enable the another radio access node to support communications with the user equipment, the step of determining comprises determining whether a context identifier has been allocated for use by the user equipment and, if so, utilising the context identifier; and the step of providing comprises providing a context together with the context identifier to the another radio access node. Accordingly, each radio access node may be provided with the same context identifier so that all contexts associated with a particular user equipment throughout the network can readily be identified.

In one embodiment, the method comprises: on occurrence of an event, transmitting a control message to at least one radio access node, the control message including the context identifier allocated to the user equipment to identify contexts for the user equipment to which the control message relates. Accordingly, when the network requires, a control message may be transmitted which includes the context identifier in order to identify all contexts for a particular user equipment to which that control message relates.

In one embodiment, the control message comprises a purge instruction instructing a receiving radio access node to purge the context associated with the context identifier. Accordingly, the control message may include a purge or delete instruction which instructs radio access node to purge or delete all contexts associated with context identifier. Hence, it can be seen that all contexts for a particular user equipment may be deleted using a simple instruction.

In one embodiment, the control message comprises a multi-cast message transmitted to all radio access nodes supported by the network node. Accordingly, a single multicast message may be transmitted to all radio access nodes. Hence, a single message may be utilized to control all contexts for a user equipment throughout the network.

In one embodiment, the method comprises: repeating transmission of the multicast message a plurality of times. It will be appreciated that this helps to improve the reliability of the messaging.

In one embodiment, the method comprises: storing an association between the context identifier allocated to the user equipment and an indication of radio access nodes provided with a context together with the context identifier for the user equipment. Accordingly, the network node may also maintain a record of which radio access nodes are provided with a context associated with a particular user equipment.

In one embodiment, the control message comprises a uni-cast message transmitted to a radio access node supported by the network node indicated by the association. Accordingly, the stored association may identify those radio access nodes to which unicast messages need to be sent in order to control contexts for a particular user equipment.

In one embodiment, the control message comprises a sequence of uni-cast messages transmitted to each radio access node supported by the network node indicated by the association. Again, this helps to improve the reliability of these messages.

In one embodiment, the method comprises: repeating transmission of the uni-cast message for those radio access nodes which fail to provide an acknowledgement within a time period.

In one embodiment, the method comprises: purging allocation of the context identifier for use by the user equipment on receipt of acknowledgements from all radio access nodes indicated by the association. Hence, when it has been confirmed that all radio access nodes have received the control message, then the association within the network node may also be deleted. This helps to free up resources and enables the context identified to be reused.

In one embodiment, the method comprises: transmitting a page message for the user equipment comprising a purge instruction instructing the user equipment to purge the context stored therein. Accordingly, both the radio access nodes and the user equipment may be instructed to purge or delete the contexts.

In one embodiment, the method comprises retransmitting the page message when no acknowledgement of receipt is received.

In one embodiment, the control message comprises a sequence number. The provision of a sequence number helps the recipient to ensure no replay attacks are being made.

In one embodiment, at least part of the control message is encrypted.

In one embodiment, the context identifier is unique within the wireless telecommunications network.

In one embodiment, the event comprises at least one of an expiration of a timer, detection of detachment of the user equipment and detection of anomalous behaviour by the user equipment. It will be appreciated that a variety of different reasons may exist for transmitting the control message.

In one embodiment, the context comprises a security context and the context identifier comprises a security context identifier.

According to a second aspect, there is provided a wireless telecommunications network node, comprising: reception logic operable to receive a request from a radio access node to provide a context to enable the radio access node to support communications with a user equipment; determining logic operable to determine whether a context identifier has been allocated for use by the user equipment and, if not, to allocate a context identifier for use with requests to provide a context for the user equipment; and transmission logic operable to provide a context together with the context identifier to the radio access node.

In one embodiment, the reception logic is operable to receive a request from another radio access node to provide a context to enable the another radio access node to support communications with the user equipment, the determining logic is operable to determine whether a context identifier has been allocated for use by the user equipment and, if so, to utilise the context identifier; and the transmission logic is operable to provide a context together with the context identifier to the another radio access node.

In one embodiment, the transmission logic is operable, on occurrence of an event, to transmit a control message to at least one radio access node, the control message including the context identifier allocated to the user equipment to identify contexts for the user equipment to which the control message relates.

In one embodiment, the control message comprises a purge instruction instructing a receiving radio access node to purge the context associated with the context identifier. In one embodiment, the control message comprises a multi-cast message transmitted to all radio access nodes supported by the network node.

In one embodiment, the transmission logic is operable repeat transmission of the multicast message a plurality of times.

In one embodiment, the determining logic is operable to store an association between the context identifier allocated to the user equipment and an indication of radio access nodes provided with a context together with the context identifier for the user equipment.

In one embodiment, the control message comprises a uni-cast message transmitted to a radio access node supported by the network node indicated by the association.

In one embodiment, the control message comprises a sequence of uni-cast messages transmitted to each radio access node supported by the network node indicated by the association.

In one embodiment, the transmission logic is operable to repeat transmission of the uni-cast message for those radio access nodes which fail to provide an acknowledgement within a time period.

In one embodiment, the determining logic is operable to purge allocation of the context identifier for use by the user equipment on receipt of acknowledgements from all radio access nodes indicated by the association.

In one embodiment, the transmission logic is operable to transmit a page message for the user equipment comprising a purge instruction instructing the user equipment to purge the context stored therein.

In one embodiment, the transmission logic is operable to retransmit the page message when no acknowledgement of receipt is received.

In one embodiment, the control message comprises a sequence number.
wherein at least part of the control message is encrypted.

In one embodiment, the context identifier is unique within the wireless telecommunications network.

In one embodiment, the event comprises at least one of an expiration of a timer, detection of detachment of the user equipment and detection of anomalous behaviour by the user equipment.

In one embodiment, the context comprises a security context and the context identifier comprises a security context identifier.

According to a third aspect, there is provided a wireless telecommunications network radio access node method, comprising: transmitting a request to a network node to provide a context to enable communications to be supported with a user equipment; receiving a context together with the context identifier allocated to the user equipment from the network node; and storing the context together with the context identifier.

In one embodiment, the method comprises: receiving a control message from the network node, the control message including the context identifier allocated to the user equipment to identify contexts for the user equipment to which the control message relates.

In one embodiment, the control message comprises a purge instruction instructing the radio access node to purge the context associated with the context identifier.

In one embodiment, the control message comprises a multi-cast message.

In one embodiment, the control message comprises a uni-cast message.

In one embodiment, the method comprises: transmitting an acknowledgement on receipt of the uni-cast message.

In one embodiment, the method comprises: transmitting an acknowledgement following purging of contexts associated with the context identifier.

In one embodiment, the control message comprises a sequence number.

In one embodiment, at least part of the control message is encrypted.

In one embodiment, the context identifier is unique within the wireless telecommunications network.

In one embodiment, the event comprises at least one of an expiration of a timer, detection of detachment of the user equipment and detection of anomalous behaviour by the user equipment.

In one embodiment, the context comprises a security context and the context identifier comprises a security context identifier.

According to a fourth aspect, there is provided a wireless telecommunications network radio access node, comprising: transmission logic operable to transmit a request to a network node to provide a context to enable communications to be supported with a user equipment; reception logic operable to receive a context together with the context identifier allocated to the user equipment from the network node; and storage operable to store the context together with the context identifier.

In one embodiment, the reception logic is operable to receive a control message from the network node, the control message including the context identifier allocated to the user equipment to identify contexts for the user equipment to which the control message relates.

In one embodiment, the control message comprises a purge instruction instructing the radio access node to purge the context associated with the context identifier.

In one embodiment, the control message comprises a multi-cast message.

In one embodiment, the control message comprises a uni-cast message.

In one embodiment, the transmission logic is operable to transmit an acknowledgement on receipt of the uni-cast message.

In one embodiment, the transmission logic is operable to transmit an acknowledgement following purging of contexts associated with the context identifier.

In one embodiment, the control message comprises a sequence number.

In one embodiment, at least part of the control message is encrypted.

In one embodiment, the context identifier is unique within the wireless telecommunications network.

In one embodiment, the event comprises at least one of an expiration of a timer, detection of detachment of the user equipment and detection of anomalous behaviour by the user equipment.

In one embodiment, the context comprises a security context and the context identifier comprises a security context identifier.

According to a fifth aspect, there is provided a computer program product operable, when executed on a computer, to execute the method steps of the first or third aspects.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 illustrates user equipment context information;
Figure 2 illustrates messaging during a radio resource connection (RRC) connection;
Figure 3 illustrates messaging during a radio resource connection (RRC) connection in a connectionless environment;
Figure 4 illustrates messaging during a reconnection in a connectionless environment;
Figure 5 illustrates messaging during a radio resource connection (RRC) connection utilising cookies according to one embodiment;
Figure 6 illustrates a control message according to one embodiment; and
Figure 7 illustrates transmission of control messages according to one embodiment.

### DESCRIPTION OF THE EMBODIMENTS

### Overview

Before discussing the embodiments in any more detail, first an overview will be provided. As mentioned above, in some wireless telecommunications networks, it is possible to store user equipment contexts (such as, for example, security contexts) in both the user equipment and radio access node, irrespective of whether or not a user is still active with that particular radio access node. For example, in a network using a so-called "connectionless approach ", as described in 3GPP TS 23.887 v.0.9.0, the contexts may be stored for a time defined by an aging timer, rather than being deleted or purged immediately when the user is no longer active with that radio access node. This allows user equipment to access network services for that period using those radio access nodes without needing to contact the central core network again to obtain authorization and new context. In particular, during this connectionless approach, when a user equipment is authorized to access the network using a radio access node, then the context provided by the central core network node to support that access is stored by both the user equipment and the radio access node for a period of time. Should the user equipment become detached from the radio access node then the context is not immediately deleted, but is retained for that period of time. Should the user equipment then reattach to that radio access node, then the context maybe reused, which avoids the need for the radio access node to obtain this from the central core network node. This helps to reduce the interactions between the radio access node and the central core network node. After the timeout expires, the context is then deleted from both the user equipment and the radio access node.

Although this connectionless approach helps to reduce the core network load, user equipment are able to obtain access to network services until the timeout expires. If it proved necessary to prevent or change the way that the user equipment accesses the network, the may be a problem that the user equipment is still able to access network services using any of these radio access nodes for the duration of the aging timer and, if the aging timer has been set to be a relatively long, in order to maximize the benefits by minimizing the number of radio access node/ central core network node interactions, then this may be a problem.

Using this connectionless approach, in order bar the user equipment from accessing the network, it would be necessary to wait for all of the context to age out when the timer expires. Another approach would be for the central core network node to remember all the radio access nodes that the user equipment is allowed to access, when it assigned a context for the user equipment to those nodes. However, this would mean that the central core network node would have to keep the list updated with aging timers and then send the requests to purge the context from only those radio access nodes where the context it is known to still be valid; this is computationally burdensome and can also create a significant amount of signalling.

Accordingly, embodiments provide a technique where, when a user equipment attaches to the network, a central core network node (such as a mobility management entity or the like) creates a cookie (or other identifier) for the user equipment, if no cookie for that user equipment already exists; otherwise an existing cookie for that user equipment is reused. When a radio access network node (such as a base station) is provided with user equipment context from the central core network node, the central core network node also passes this cookie to the radio access node. All the radio access nodes which have a valid context for the user equipment are able to index the contexts by cookie so that the central core network node can point to the context using the cookie. In other words, all contexts in the network associated with a particular user equipment can be identified by the cookie.

To control the contexts, the central core network node transmits a control message, which includes the cookie, to the radio access nodes, which identifies the contexts which are to be controlled. For example, to purge a user equipment, the central core network node sends a control message which includes the cookie instructing radio access nodes to delete the contexts associated with that cookie. Because there is a one-to-one correlation between the cookie and a user equipment, the contexts for that user equipment and only that user equipment can readily be identified and controlled in the radio access nodes by the central core network node. Although the control messages can be sent to each radio access node individually, this approach also enables a multicast control message to be transmitted to radio access nodes to request that they purge the user equipment. Since all the radio access nodes use the same cookie for that user equipment, then only those radio access nodes which have a cookie matching that in the multicast message will respond and only the contexts associated with that cookie (and therefore associated with the intended user equipment) will be deleted.

Typically, the control message may be encrypted with a group key so that the cookie remains confidential and the source of the message is implicitly authenticated. Also, the control message may have a sequence number incorporated therein, which is also encrypted so that replay-based attacks can be avoided.

When a user equipment eventually detaches from the network, the cookie can then be released and is invalidated using a control message. This prevents the user equipment from reusing the previously provided context.

### User Equipment Connection and Context

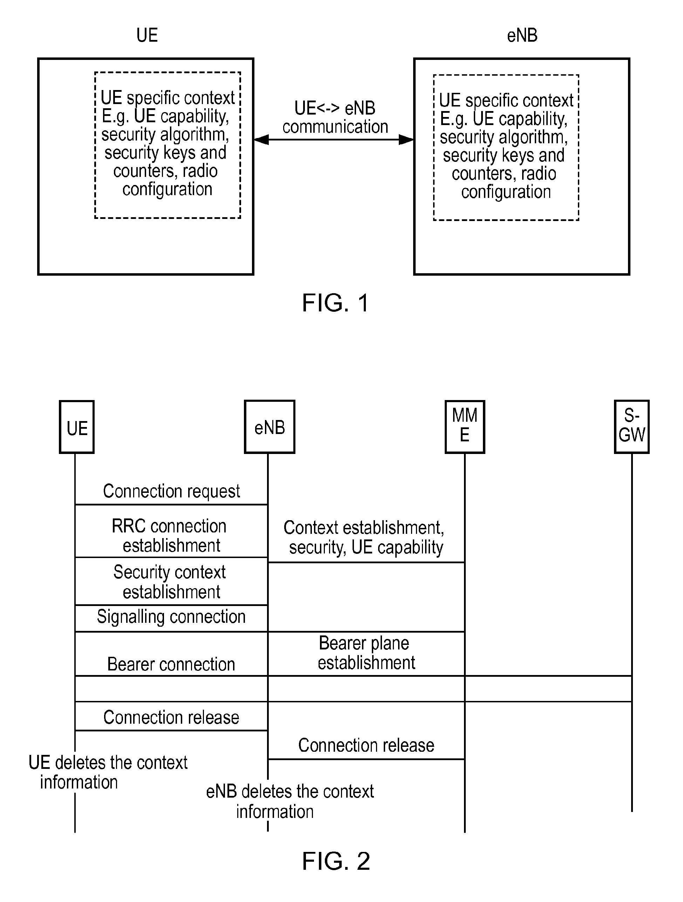

In a long-term evolution (LTE) network, as with many other wireless networks, the network and the user equipment maintain some state information (often known as "context") to facilitate communication between the user equipment and the network. It will be appreciated that the context may include security information, user equipment capabilities, transmission characteristics, quality of service, and the like. When the user equipment is in active communication, it is said to be in a "radio resource connection (RRC) connected" state and some of the information stored in the user equipment and network contexts is shown in Figure 1. Typically, this context is released (all this information is deleted) when the user equipment releases the RRC connection.

Figure 2 illustrates typical signalling between network nodes when entering the RRC connected state and shows that the base station (eNB) and the user equipment deletes this context when the RRC connection is released.

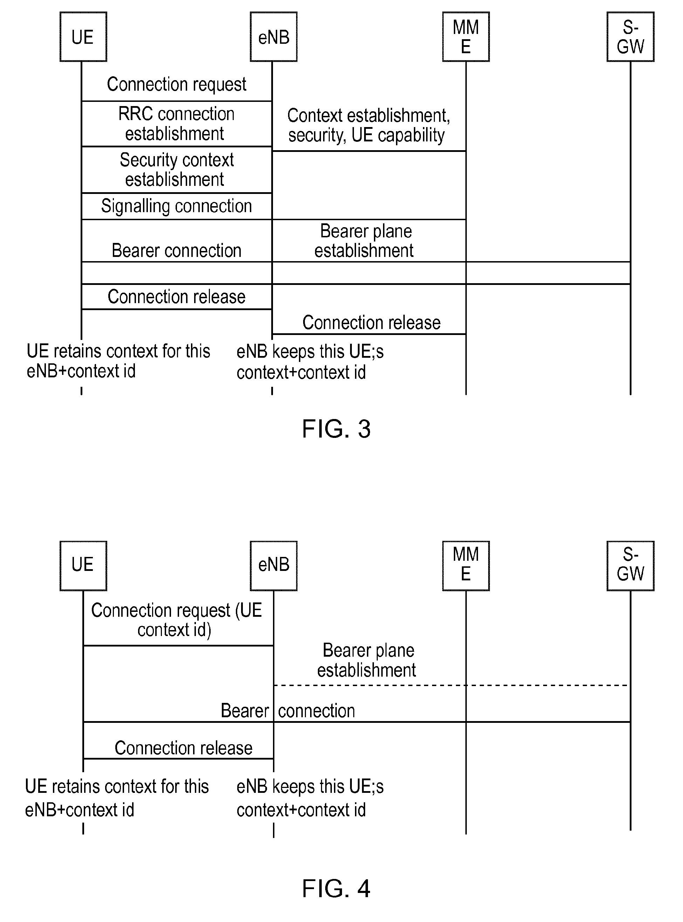

However, when the operating in the connectionless approach, the user equipment and the base station maintains the context information even after the radio resource connection is released. As can be seen in Figure 3, when the radio resource connection is released, both the user equipment and the base station continue to store the context information. The context information for the cell is stored even when the user equipment connects to another base station. Hence, the user equipment may the store contexts for several cells.

When the connectionless approach is used, and the context is maintained, the next time the user equipment connects to a base station for which it has the context still stored, the user equipment need only provide a context identifier to the base station. This enables the base station and the user equipment to both know the context being used and communication between the user equipment and base station can continue from where it left off previously, as illustrated in Figure 4.

### Cookie Allocation

In order to enable purging in an efficient manner, the MME allocates a cookie or other identifier (it may even be the user equipment identifier) each time a user equipment attaches to the network (such as the evolved packet system GPS). This cookie is then associated with the user equipment. As the cookie value needs to be unique within the whole network, it may be necessary for the cookie to include a portion of its value which is linked to a unique value associated with each MME in order to avoid different MMEs using the same cookie value.

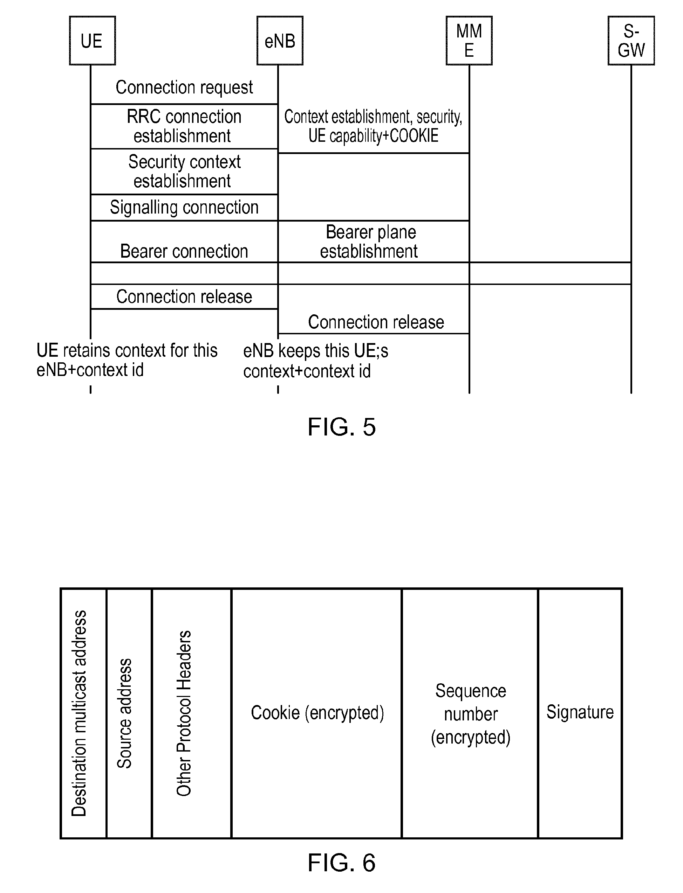

When a context is installed in a base station, the cookie is associated with it and the cookie is also stored in the base station. This is for all base stations where context is stored and the aging timer has not yet elapsed. Of course, if a cookie or context identifier has already been allocated to the user equipment, then this cookie is reused when other contexts are installed on the other base stations. The cookie will typically be encrypted with a key shared by both the MME and base station. The provision of the cookie is illustrated in Figure 5.

When the central core network node (such as the MME) needs to delete the contexts (which it may do periodically, randomly, when the user equipment detaches or when unusual behaviour is detected within the user equipment and it is desired to re-authenticate all contexts), then the MME sends a multi-cast control message having a configuration as shown in Figure 6 to all base stations.

As can be seen in Figure 6, the packet forming the control message is signed (excluding the multicast IP address) so that the source address and the content is authenticated, using the same key as that used to encrypt the cookie and the sequence number. By encrypting the packet in this way, the possibility of rogue behaviour by another party to interfere with the stored contexts can be minimized.

Also, by adding a sequence number, the possibility of replay attacks can be avoided since a recipient will typically discount any messages having a sequence number which is typically equal to or less than the sequence number of a previous message.

The packet is typically an IP packet carried over the backhaul links to the base stations using plain IP multicast routing. It will be appreciated that each base station that can store the contexts described above will need to join the multicast group associated with the destination IP multicast address using, for example, IGMPv3.

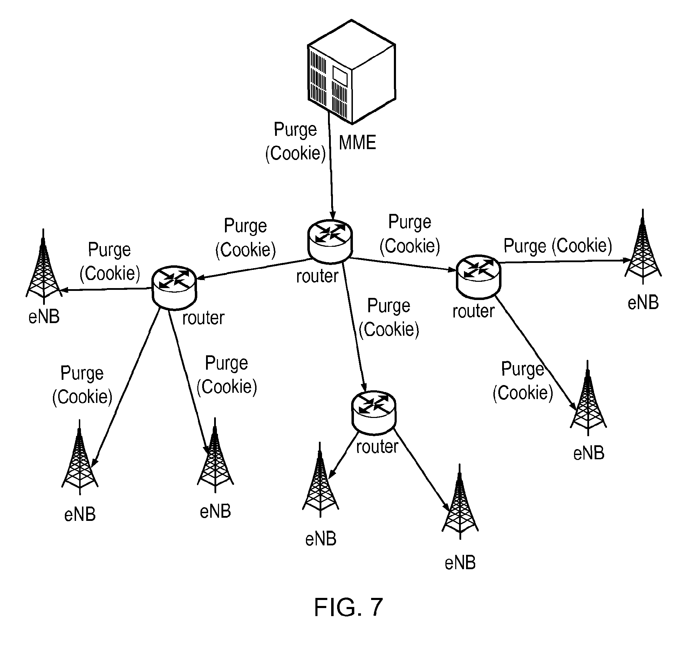

As illustrated in Figure 7, using a multicast control message provides for high efficiency since the MME has to send just one control message and does not have to keep track of which contexts were set in which base station for which use equipment. Instead, every base station can receive the control message and will only react to that control message if it has a cookie associated with a stored context matching that within the control message. Those base stations which receive the message but do not have a matching cookie stored can simply disregard the message. Also, by associating the cookies with the user equipment, all contexts within the network can be removed for a user equipment by simply using that cookie.

Hence, it can be seen that this is a very scalable approach. Also, this approach is fast compared to the transmission of a sequential set of unicast messages which will take longer and will delay the overall procedure. In order to improve the reliability, the multicast message could be transmitted to a number of times, each spaced by a configurable time interval.

However, a drawback with this approach is that since no confirmation is provided from the base stations, the approach may not be 100% reliable. Accordingly, if absolute reliability is required, each base stations having a context associated with a user equipment will need to be recorded in the MME and the MME may need to perform a sequential procedure using unicast messaging or by using the multicast approach, but expecting a response packet acknowledging deletion from all base stations in the list of base stations with a context as stored in the MME. The MME may then continue repeating the sending of the purge control message for the cookie until the whole set of base stations respond.

Irrespective of whether multicast or unicast messages are used, the MME may also transmit a paging message to the user equipment instructing that it also purges the contexts which it has stored. The message may also take a form similar to that shown in Figure 6, but reconfigured to be transmitted within a conventional paging message to the user equipment. Again, the user equipment may or may not acknowledge receipt of that paging message in response.

Accordingly, it can be seen that this technique allows purging of context quickly, using a scalable procedure which is efficient for the MME since it has low memory usage and computational complexity. In networks that retain the context for a long period of time, this may be a significant advantage.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/ or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A wireless telecommunications network node method, comprising:
receiving a request from a radio access node to provide a context to enable said radio access node to support communications with a user equipment;
determining whether a context identifier has been allocated for use by said user equipment and, if not, allocating a context identifier for use with requests to provide a context for said user equipment; and
providing a context together with said context identifier to said radio access node.

2. The method of claim 1, wherein said step of receiving comprises receiving a request from another radio access node to provide a context to enable said another radio access node to support communications with said user equipment, said step of determining comprises determining whether a context identifier has been allocated for use by said user equipment and, if so, utilising said context identifier; and said step of providing comprises providing a context together with said context identifier to said another radio access node.

3. The method of claim 1 or 2, comprising:
on occurrence of an event, transmitting a control message to at least one radio access node, said control message including said context identifier allocated to said user equipment to identify contexts for said user equipment to which said control message relates.

4. The method of claim 3, wherein said control message comprises a purge instruction instructing a receiving radio access node to purge said context associated with said context identifier.

5. The method of claim 3 or 4, wherein said control message comprises a multi-cast message transmitted to all radio access nodes supported by said network node.

6. The method of any preceding claim, comprising:
storing an association between said context identifier allocated to said user equipment and an indication of radio access nodes provided with a context together with said context identifier for said user equipment.

7. The method of any one of claims to 6, wherein said control message comprises one of: a uni-cast message transmitted to a radio access node supported by said network node indicated by said association; and

8. The method of any one of claims to 7, wherein said control message comprises a sequence of uni-cast messages transmitted to each radio access node supported by said network node indicated by said association.

9. The method of any preceding claim, comprising:
purging allocation of said context identifier for use by said user equipment on receipt of acknowledgements from all radio access nodes indicated by said association.

10. The method of any preceding claim, comprising:
transmitting a page message for said user equipment comprising a purge instruction instructing said user equipment to purge said context stored therein.

11. The method of any one of claims 3 to 10, wherein said event comprises at least one of an expiration of a timer, detection of detachment of said user equipment and detection of anomalous behaviour by said user equipment.

12. A wireless telecommunications network node, comprising:
reception logic operable to receive a request from a radio access node to provide a context to enable said radio access node to support communications with a user equipment;
determining logic operable to determine whether a context identifier has been allocated for use by said user equipment and, if not, to allocate a context identifier for use with requests to provide a context for said user equipment; and
transmission logic operable to provide a context together with said context identifier to said radio access node.

13. A wireless telecommunications network radio access node method, comprising:
transmitting a request to a network node to provide a context to enable communications to be supported with a user equipment;
receiving a context together with said context identifier allocated to said user equipment from said network node; and
storing said context together with said context identifier.

14. A wireless telecommunications network radio access node, comprising:
transmission logic operable to transmit a request to a network node to provide a context to enable communications to be supported with a user equipment;
reception logic operable to receive a context together with said context identifier allocated to said user equipment from said network node; and
storage operable to store said context together with said context identifier.

15. A computer program product operable, when executed on a computer, to execute the method steps of any one of claims 1 to 11 and 13.
